# EUROPEAN PATENT SPECIFICATION

(11) **EP 3 172 781 B1**
(45) Date of publication and mention of the grant of the patent: **03.06.2020**
(21) Application number: 15824158.8
(22) Date of filing: 21.07.2015
(51) Int. Cl.: H01M 2/02, H01M 2/06, H01M 10/04, H01M 10/058, H01M 10/623, H01M 2/10, H01M 4/24, H01M 4/38, H01M 4/48, H01M 4/50, H01M 4/62, H01M 4/66, H01M 10/26, H01M 10/28

(54) **FLEXIBLE MICRO-BATTERY**
FLEXIBLE MIKROBATTERIE
MICRO-BATTERIE SOUPLE

(30) Priority: 21.07.2014 US 201462026851 P
(43) Date of publication of application: 31.05.2017
(73) Proprietor: Johnson & Johnson Vision Care, Inc., Jacksonville, FL 32256 (US)
(72) Inventor: WEINSTEIN, Lawrence Edward, Silver Spring , Maryland 20901 (US); AUDEBERT, Jean-Francois, Falls Church, Virginia 22042 (US); PAGLIARO, Leonard, Bowie, Maryland 20716 (US); XU, Taylor, Rockville , Maryland 20851 (US); HOWARTH, Jonathan, Baltimore, Maryland 21231 (US)
(74) Representative: Carpmaels & Ransford LLP
(86) International application number: PCT/US2015/041365
(87) International publication number: WO 2016/014554

(56) References cited:
- WO-A1-2013/019525
- CA-A1- 2 843 727
- CN-A- 102 881 944
- CN-A- 103 915 646
- CN-U- 203 636 362
- US-A1- 2011 311 857
- US-A1- 2012 107 666
- US-A1- 2013 029 205

## Description

### FIELD OF THE INVENTION

The present invention generally relates to an electrochemical battery, and more particularly to a biocompatible micro-electrochemical cell.

### BACKGROUND OF THE INVENTION

There are a number of micro-batteries which have been developed, some of which are designed to be implantable or otherwise associated with a medical or other device that require a power source for operation. For purposes of this specification, a micro-battery is defined by its relatively small dimensions. Specifically, at least one dimension (that is the length, width or thickness of the battery) shall be less than one millimeter (1.0 mm), and a second dimension shall be less than one centimeter (1.0 cm), whereas the volume of the micro-battery shall be less than 0.003 cc or three thousandths of a cubic centimeter.

Micro-batteries used in ocular medical devices can have unique and challenging requirements such as the need for mechanical robustness, a degree of flexibility, and biocompatibility. A contact lens using a micro-battery requires the battery to possess the qualities of the lens by having a long shelf life, have a measure of flexibility and maintaining integrity and operability after being manipulated, and be biocompatible for the time period starting with lens manufacturing through the usage lifetime of the lens. This time period exposes the micro-battery to the saline solution within the lens, either directly or through an intermediate layer, and the micro-battery must not only maintain its capacity and ability to provide the required power to the lens, but also be adequately sealed so as to prevent leaching of the battery components. The dimensions of a micro-battery makes isolation of the battery components particularly challenging as the surface area to volume ratio of the micro-battery can be very high.

The micro-battery can be stored within an ocular lens for years, with the lens containing the micro-battery stored inside of a sealed package filled with a saline packing solution. This storage environment is similar to being stored in sterile saline solution in which the ocular lens is immersed. This storage condition and the environment of an ocular lens or other device in vivo (or in vivo - like) conditions requires that the micro-battery be designed to tolerate the given environment without failure due to water ingress through the packaging into the interior of the micro-battery and leading to swelling. The micro-battery packaging can be considered a permeable membrane in that it has a measure of permeability. Osmotic pressure differences can therefore be created which can motivate water to migrate in to the micro-battery interior. Often, conventional battery electrolytes are nonaqueous and do not tolerate moisture contamination, or are highly concentrated acidic solutions (for example, zinc chloride) or basic solutions, such as potassium hydroxide. Use of an electrolyte with a low salt concentration is possible in order to reduce the osmotic pressure difference between the electrolyte and the packing solution. However, such dilute electrolytes have historically not been used in batteries with robust performance.

Another issue related to biocompatibility and osmotic pressure is the pH of the electrolyte. Typically aqueous battery electrolytes are not biocompatible. In a typical alkaline battery the potassium hydroxide electrolyte is strongly alkaline to increase ionic conductivity and in a carbon zinc or LeClanche cells the acid pH of the electrolyte can strongly influence hydrogen gas production on the zinc surface. Strongly acidic or basic electrolytes are not biocompatible and neither are typical corrosion inhibitors such as mercury.

Many micro-batteries, especially those mass produced or those needing biocompatibility are encased in rigid exteriors. Their rigidity typically does not allow such batteries to be utilized in flexible devices. Furthermore, the rigid casing design limits the dimensions of the battery which are possible, since a minimum casing thickness is required to maintain rigidity.

Batteries utilizing conductive traces require both flexible traces and flexible substrates on which to support the trace. Such flexibility is not found in materials compatible with an oxidizing battery environment. Instead, the batteries of the prior art are typically constructed to be generally immobile after being manufactured. Movement of the battery can adversely affect connections, sealing of the exterior and otherwise affect the proper operation of the battery.

There exists a need for a micro power supply that is biocompatible, can be used in medical and other small devices, and that is capable of repeated or continuous operation by providing required energy while the device is being, bent, flexed or otherwise manipulated and after such manipulation.

CA2843727A1 describes a biocompatible wire battery.

### SUMMARY OF THE INVENTION

The invention is as defined in claim 1.

According to one aspect of the present invention, an electrochemical micro-battery with biocompatible components is provided that comprises an anode, which is cylindrical, extending along a first vector and a planar cathode extending along a second vector. The second vector is parallel to said first vector, and the cathode is disposed from the anode by a predetermined space. A cathode collector is in electrical contact with the cathode and extends along the second vector. In an aspect the cathode collector is positioned within the cathode. The electrochemical micro-battery also includes an electrolyte positioned surrounding both the anode and the cathode and positioned within the predetermined space to provide ionic conductivity between the anode and cathode.

In an aspect, the electrochemical battery can further comprise an anode current collector, wherein the anode and the anode current collector are bonded in electrical communication. The anode and the anode current collector are positioned to extend along the first vector in a first stacked arrangement, and the cathode and said cathode current collector are bonded in electrical communication, and are positioned to extend along the second vector in a second stacked arrangement. The first stacked arrangement and the second stacked arrangement are separated relative each other by the predetermined space. A separator can be positioned between the first stacked arrangement and the second stacked arrangement within the predetermined space.

Packaging generally surrounds the anode, cathode, cathode collector and the electrolyte. Terminal ends of the anode extend through the packaging along the first vector, and the cathode collector also extends through the packaging along the second vector. The packaging has a generally uniform thickness. The packaging can be customized and accommodate an electrochemical battery cell which is formed into a desired shape in three dimensions. The packaging prevents water and oxygen migration through said packaging. In an aspect, the packaging comprises a polymer coated with a metal oxide. The water vapor transmission rate of the packaging is less than 1 g/m2-day when measured at between 85 and 100% relative humidity and between 20 and 40 degrees Celsius. Thus in the electrochemical micro -battery, with a volume equal to or less than three cubic millimeters (3.0 mm³), having an interior space which is encapsulated by biocompatible packaging, which in one aspect is positioned in ion communication with a bodily fluid, or an artificial bodily fluid such as saline solution, the packaging acts to inhibit mass transfer between the interior space and the bodily fluid or saline solution.

The electrochemical micro-battery can be shaped in all three dimensions and embodiments include a planar shape as well as a shape wherein both the first vector and the second vector are arcuate, and wherein the first vector and second vector are concentric to each other.

The electrochemical micro-battery according to further aspects of the present invention includes an anode made of zinc. In an aspect of the invention the anode is a zinc wire. The cathode of the present invention comprises manganese dioxide, a conductive additive material, and a binder. The cathode collector can comprise a wire shaped metal such as titanium and can be positioned adjacent or alternatively within the cathode. In the embodiment where the cathode collector is positioned within the cathode the diameter of the anode equals the thickness of the cathode, so that the thickness of the electrochemical cell equals the anode diameter in addition to the packaging thickness.

The first electrochemical cell of the micro-battery can operate as a single cell or be connected to a second electrochemical cell in series or parallel to the first electrochemical cell. In the series embodiment the anode of the first electrochemical cell is electrically connected to the cathode collector of the second electrochemical cell. The anode of the electrochemical cell can be welded to the cathode collector of the second electrochemical cell to form a mechanically secure and electrically communicating connection. The micro-battery cells can be independently packaged or the packaging of the first electrochemical cell and the packaging of the second electrochemical cell are joined as to form a contiguous package. In an aspect, when the second electrochemical cell is connected in series to said electrochemical cell, the anode of the electrochemical cell is electrically connected to a cathode collector of said second electrochemical cell, and the packaging of the electrochemical cell and the packaging of the second electrochemical cell are joined as to form a contiguous package. In an aspect wherein the anode of the electrochemical cell further includes an anode collector in electrical communication with the anode of the electrochemical cell, the anode collector extends out of the electrochemical cell and extends into the second electrochemical cell, and wherein the anode collector is electrically connected to the cathode of the second electrochemical cell, and wherein the packaging of the electrochemical cell and the packaging of the second electrochemical cell are joined as to form a contiguous package.

In an example not forming part of the claimed invention, the volume of the electrochemical battery is equal to or less than three cubic millimeters (3.0 mm³). The anode has a length extending along the first vector, and a width and thickness extending perpendicular to said first vector, wherein the width is greater than the thickness, and the ratio of the length to the width is greater than twenty to one (20:1). The cathode has a length extending along the second vector, and a width and thickness extending perpendicular to the second vector, the width is greater than said thickness, and the ratio of the length to the width is greater than ten to one (10:1).

In an aspect, the interior space of the micro-battery comprises an aqueous neutral electrolyte solution, such as zinc acetate. The concentration of the zinc acetate in the electrolyte comprises less than ten weight percent of said electrolyte (10 wt%). The pH of the electrolyte is between 6 and 8, wherein the packaging is positioned in ionic communication with a saline solution, the difference between the osmotic pressure of the electrolyte relative the osmotic pressure of the saline solution is less than ten atmosphere (10 atm). The anode comprises zinc and the cathode comprises manganese dioxide. The anode current collector and the cathode current collector can each comprise titanium, tantalum, platinum or other electrically conductive, flexible, biocompatible material. The anode can include both zinc powder, and a zinc article such as zinc foil extending the length of the battery, wherein the zinc powder is in electrical communication with the zinc article.

The micro-battery can be constructed according to an exemplary method comprising the steps of: forming a cathode having a length and thickness, wherein the ratio of the length to the thickness is equal to or greater than 50:1; attaching the cathode to a cathode collector which extends the length of the cathode to form a cathode assembly; forming an anode having a length and thickness, wherein the ratio of the length to the thickness is equal to or greater than 50:1; distribute an aqueous electrolyte around both the anode and the cathode assembly to enable ionic communication between the cathode and anode; and placing the cathode assembly, the electrolyte and the anode within a first and second portion of thermoplastic packaging. The first and second portions envelop all of the electrolyte, a portion of the cathode assembly and a portion of the anode to form a battery interior bounded by sides of the battery interior, except to enable an end portion of the cathode assembly and anode to extend out of the battery interior at both a first and second end of the micro-battery; sealing the battery interior by heating the first and second portions of the packaging along the length of the battery interior sides, and sealing the battery interior at the first and second end of the micro-battery by sealing the packaging around the extending anode and cathode assembly; and removing packaging external to the sealed micro-battery. In an aspect of the method, the first and second portions of the packaging are placed within an ultrasonic welder, and the ultrasonic welder seals the first and second portions of the packaging around the battery interior by sealing the packaging, and cutting the packaging at the seal in one step. In an aspect, a separator can be inserted between the anode and cathode. In another aspect, the anode is attached to an anode collector, and the anode collector is positioned to extend out of the battery interior at both the first and second ends of the micro-battery.

These and other features, advantages, and objects of the present invention will be further understood and appreciated by those skilled in the art by reference to the following specification, claims, and appended drawings.

### BRIEF DESCRIPTION OF THE DRAWINGS

In the drawings:
FIG. 1 is a cross-sectional view of an electrochemical battery cell taken along a plane normal to the vector L (length);
FIG. 2 is a cross-sectional view of the electrochemical battery cell taken along a plane normal to the vector H (height);
FIG. 3 is a cross-sectional representational view of the electrochemical battery cell of the present invention;
FIG. 4 is a perspective view of the electrochemical battery cell with the packaging portion exploded;
FIG. 5A is a perspective view of the packaging portion of the electrochemical battery cell, according to one embodiment;
FIG. 5B is a perspective view of the packaging portion of the electrochemical battery cell, according to another embodiment;
FIG. 6 is a cross-sectional view of the electrochemical battery cell disposed in an ultrasonic welding fixture depicting a method of sealing the exterior packaging;
FIG. 7 is a cross-sectional view of the shaped battery package illustrating two cells in series in an arcuate shape;
FIG. 8 is a cross-sectional view of the shaped battery package showing two cells in series in an arcuate shape and highlighting how the cells are electrically connected;
FIG. 9 is an enlarged section of the electrical connection between the two cells of the shaped battery package depicted in FIG. 8;
FIG. 10 is an exploded view of the electrochemical battery cell showing two cells in series in an arcuate shape, and a laser weld beam for sealing the cell packaging;
FIG. 11A is a perspective view of substrate used to prepare the present invention in the illustrative example;
FIG. 11B is a perspective view of an interim form of the cathode and cathode collector assembly of the present invention as described in the illustrative example;
FIG. 11C is a perspective view of the cathode and cathode collector assembly of the present invention as described in the illustrative example; and
FIG. 11D is perspective view of the present invention as prepared in the substrate as described in the illustrative example.

### DETAILED DESCRIPTION OF THE PREFERRED EMBODIMENTS

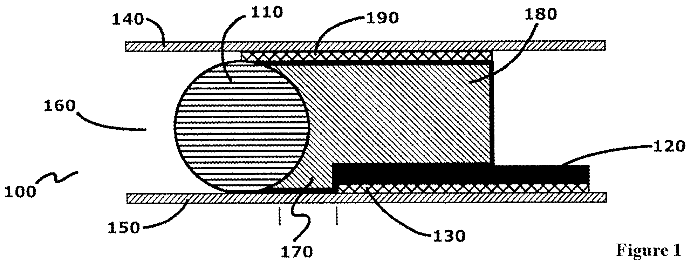

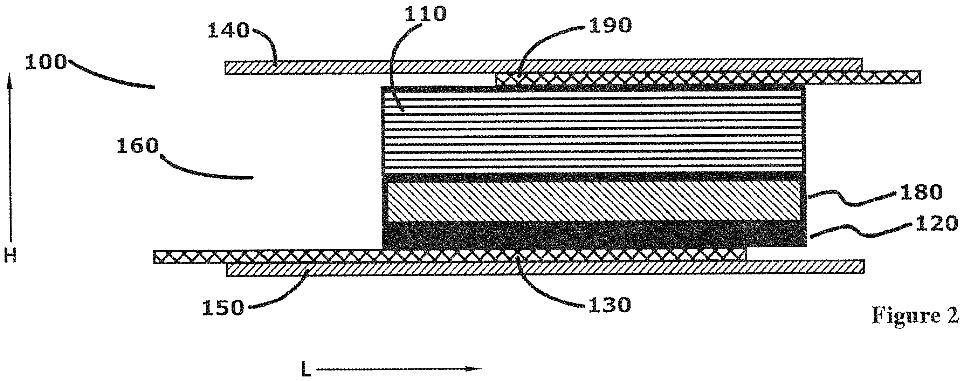

Referring to FIG. 1 and FIG. 2, there is shown two different cross sectional representations of the electrochemical battery cell 100 according to the invention. FIG. 1 is a cross section representation along a plane normal to the vector L (length) and FIG. 2 is a cross section representation along a plane normal to the vector H (height).

The electrochemical battery cell includes a cylindrical anode 110 which extends along the length of the electrochemical battery cell and serves as the negative electrode. More specifically, the anode 110 extends along a vector parallel to the length vector L shown in FIG. 2. According to the invention, the anode 110 is cylindrical in shape and circular in cross section. The diameter of the anode 110 is small enough and its aspect ratio (length to width ratio) is large enough to enable flexibility of the anode 110. The diameter is sized large enough to accommodate the absence of any current collector. As the electrochemical battery cell discharges, reactive material from the anode will electrochemically react and go into solution. As the anode reactive material leaves the anode, the surface of the anode may pit or otherwise change and a general decreasing diameter may be realized. The remaining anode material remains contiguous so as to remain capable of acting as an anode current collector throughout its length and as such is capable of conducting electrons from the anode out of the electrochemical battery cell.

As will be described again below in more detail, the anode 110 is positioned on one side of the electrochemical battery cell adjacent the exterior first and second packaging portions 140 and 150. The first packaging portion 140 and the second packaging portion 150 are disposed relative each other to form a cell interior 160. The packaging portions are manufactured from a material that can be bonded or otherwise sealed to itself. The packaging portion material should also be flexible and capable of enclosing all components located within the cell interior 160.

The electrochemical battery cell further includes a cathode 120 which also extends along the length of the electrochemical battery cell and serves as the positive electrode. More specifically, the cathode 120 extends along a vector parallel to the length vector L shown in FIG. 2. According to the invention, the cathode 120 is planar and rectangular in cross section. The cathode is positioned in electrical contact with a cathode current collector 130, and in this embodiment, is attached onto the cathode current collector 130. This arrangement of coating the cathode 120 onto a flexible conducting current collector 130 provides a flexible cathode construction that remains coherent while the electrochemical battery cell 100 is twisted, bent or otherwise contorted. As the electrochemical battery cell electrochemically discharges, reactive material from the cathode 120 will electrochemically react and possibly expand. The cathode is designed to accommodate such expansion by being made with an appropriate porosity and by being made from appropriate ingredients that accommodate any such expansion. Such accommodation enables the cathode 120 to maintain adhesion with the cathode current collector 130 and otherwise remain coherent.

The cathode 120 and the cathode current collector 130 are shown positioned and supported on the second packaging portion 150 and at a position opposed to the anode 110 within the cell interior 160. Although the sizes of the anode 110 and the cathode 120 shown in FIG. 1 and FIG. 2 are not necessarily to scale, the relative positions of the anode and cathode are gapped by a predetermined space 170. The dimensions of the predetermined space within the cell interior are important so as to ensure the anode and cathode do not make direct contact with each other which would cause a battery short circuit. The dimension should also not be so large as to prevent effective ionic charge diffusion which directly relates to the rate capability of the electrochemical battery cell. Although in alternative embodiments, a permeable membrane battery separator can be used, the cell construction of the present embodiment obviates the need for added manufacturing complexity and expense of adding such a component.

The cathode 120 and the anode 110 ionically communicate via an electrolyte 180 which is positioned such that both the anode and cathode can ionically communicate with the electrolyte material. Put another way, the electrolyte 180 allows the flow of electric charge between the anode 110 and the cathode 120. The electrolyte 180 can be a liquid, gel or semi-solid as long as it is flexible and capable of moving within the cell interior 160 while performing its task of providing ionic diffusion between the anode 110 and cathode 120.

The electrons generated by the electrochemical battery cell 100 can be conducted from the cell via an anode collector tab 190. This anode collector tab 190 can be affixed to an end of the anode 110 so as to be in electric communication with the anode 110. The anode collector tab 190 provides a shape appropriate extension of the anode 110 so that the cell interior 160 can be appropriately sealed, with both the anode 110 and cathode 120 electrically communicating exterior of the cell interior 160 and both first and second packaging portions 140 and 150. The position of the anode collector tab 190 in FIG. 1 and FIG. 2 is shown intermediate the anode 110 and the first packaging portion 140. As can be seen, this positioning may add height or a protrusion to the electrochemical battery cell 100 and an alternative position may be preferred to as to avoid increasing these dimensions. The anode collector tab 190 is shaped relative to what it will be connecting to in a device. This shape can be selected by one skilled in the art so as to create an electrically secure connection between the anode tab and the device.

Although not shown in the embodiment of FIG. 1 and FIG. 2, both the anode collector tab 190 and the cathode current collector 130 can extend beyond the respective ends of the anode 110 and the cathode 120. These extending portions of the anode collector tab 190 and the cathode current collector 130 enable more efficient sealing of the cell interior 160. The first and second packaging portions 140 and 150 can be both sealed to each other so as to seal the cell interior 160 from the exterior or the electrochemical battery cell 100, and sealed around the anode collector tab 190 and the cathode current collector 130 which extend exterior the sealed first and second packaging portions 140 and 150. As such, the anode collector tab 190 becomes the negative exterior contact for the electrochemical battery cell 100, and the cathode current collector 130 becomes the positive exterior contact for the electrochemical battery cell.

In operation, when a load (not shown) is electrically connected to both the anode collector tab 190 and the cathode current collector 130 to form a circuit, the anode 110 releases electrons via the anode collector tab 190 to the negative exterior contact while simultaneously releasing ions into the electrolyte 180. The cathode 120 accepts the electrons flowing from the circuit through the positive exterior contact and the cathode current collector 130 and electrochemically reacts so as to equilibrate the chemical potential of the electrochemical battery cell. The present arrangement of the electrochemical battery cell 100 effectively operates thus while in torsion, while being bent, or otherwise manipulated.

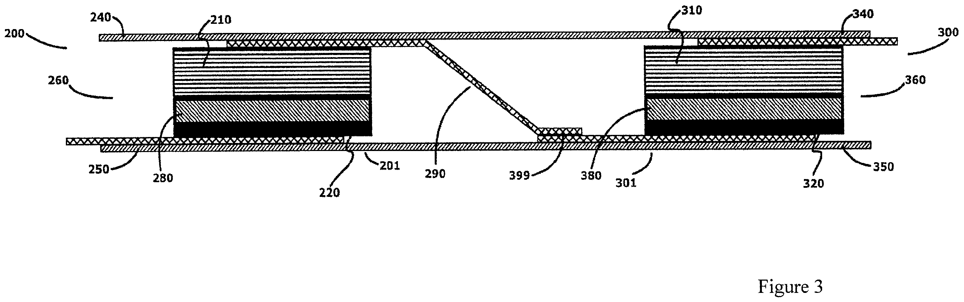

The electrochemical battery cell 100 shown in FIG. 1 and FIG. 2 can be electrically and mechanically coupled in series with an identical cell as shown in FIG. 3. In FIG. 3, there is shown a first electrochemical battery cell 200 and its respective negative end portion 201. The first electrochemical battery cell 200 possesses an anode 210, a cathode 220 and an anode collector tab 290. Also shown in FIG. 3 is a second electrochemical battery cell 300 and its positive end portion 301. The second electrochemical battery cell also has an anode 310, a cathode 320 and a cathode current collector 330. As shown in FIG. 3 the anode collector tab 290 of the first electrochemical battery cell 200 is connected to the cathode current collector 330 of the second electrochemical battery cell 300 at connection point 399. This mechanical and electrical coupling arrangement creates a multi-cell battery with two electrochemical battery cells in series so as to provide an effective voltage twice that of each individual cell. Alternative coupling arrangements can be used to create parallel and other multi-cell batteries using two or more cells.

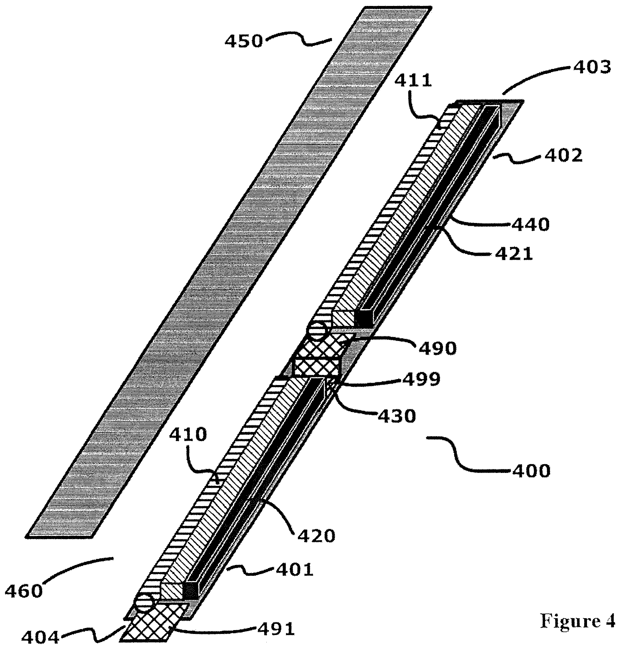

The respective packaging portions 240 and 340, and 250 and 350 are shown joined so as to form a contiguous exterior surface or manufactured as single packaging portions. However as will be described in more detail the respective cell interiors 260 and 360 are preferably segregated. In FIG. 4, there is shown an alternative view of the two batteries in series 400. A first electrochemical battery cell 401 is electrically and mechanically coupled to a second electrochemical battery cell 402. Both the first electrochemical battery cell 401 and the second electrochemical battery cell 402 have respective anodes 410 and 411, and respective cathodes 420 and 421. Each cathode is associated with and electrically coupled to a cathode current collector, and the first electrochemical battery cell cathode 420 is associated with first electrochemical battery cell cathode current collector 430, and the second electrochemical battery cell cathode 421 is likewise associated with a second electrochemical battery cell cathode current collector (not shown). The second electrochemical battery cell anode 411 is electrically and mechanically associated with a second electrochemical battery cell anode collector tab 490 which is also electrically and mechanically associated with the first electrochemical battery cell cathode current collector 430 at connection point 499.

The two electrochemical cells in series are surrounded on the cathode side by a first packaging portion 440 which extends the length of the two cells in series but is terminated at a first end 403 so as to enable the second electrochemical battery cell cathode current collector to overhang the first packaging portion. At a second end 404, the first packaging portion is similarly terminated so as to enable the first electrochemical battery cell anode collector tab 491 to extend beyond the second end. A second packaging portion 450 similar in length and width to the first packaging portion 440 is positioned adjacent the anode side of the two batteries in series and the cell interior 460 can be sealed by associating the first packaging portion 440 and second packaging portion adhesively or by welding in a manner that allows both the second electrochemical battery cell cathode current collector and the first electrochemical battery cell anode collector tab to extend beyond the packaging portions so as to enable them to be in electrical communication with an external load (not shown).

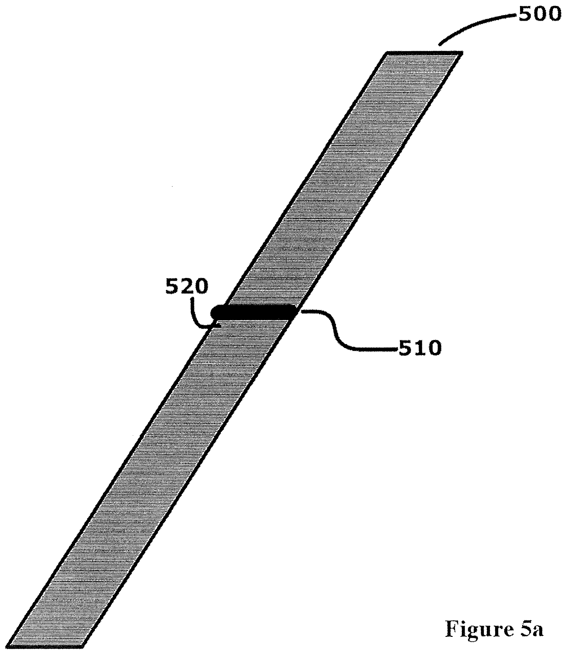

It may be preferred to segregate the cell interior 460 into individual cell interiors associated with each electrochemical battery cell. This can be done by providing a divider adjacent the connection point 499. Referring to FIG. 5A there is shown a packaging portion 500 that can be used to provide the cell interior segregation of this embodiment. The packaging portion 500 includes a divider 510 which can be affixed to the packaging portion at a segregation spot 520 on the packaging portion. The divider 510 can be configured to act as a dam between two electrochemical battery cells in series so as to prevent ionic conduction and convective flow between the cells. The divider 510 can be laser welded to the packaging portion and then again laser welded when the packaging portion 500 is sealed relative a second packaging portion via laser welding or an alternative connecting method. In an alternative embodiment, the divider can be affixed via alternative joining methods such as ultrasonic welding, or heat welding methods.

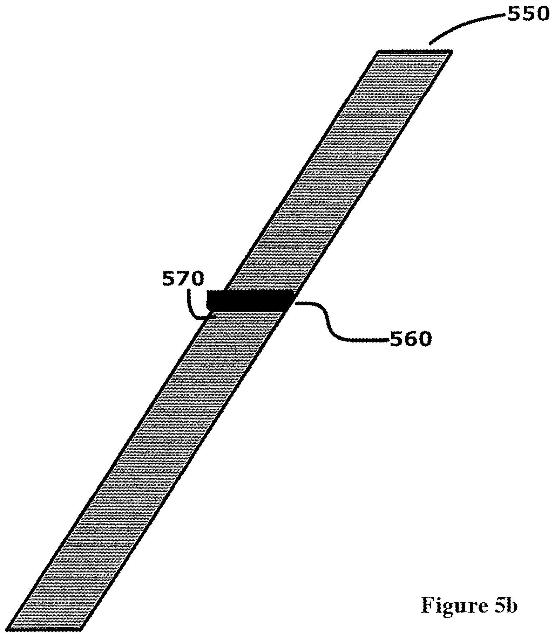

In FIG. 5B, there is shown an alternative embodiment of providing segregation of the cell interior. A packing portion 550 includes a divider 560 at a segregation spot 570 on the packaging portion. The divider 560 can be secured to the packaging portion and a second packaging portion via adhesive and more preferably via UV-cured adhesive. The first and second packaging portions can be sealed relative each other at their peripheries and the divider 560 adhesively secured to both packaging portions so as to provide the segregation of the cell interior.

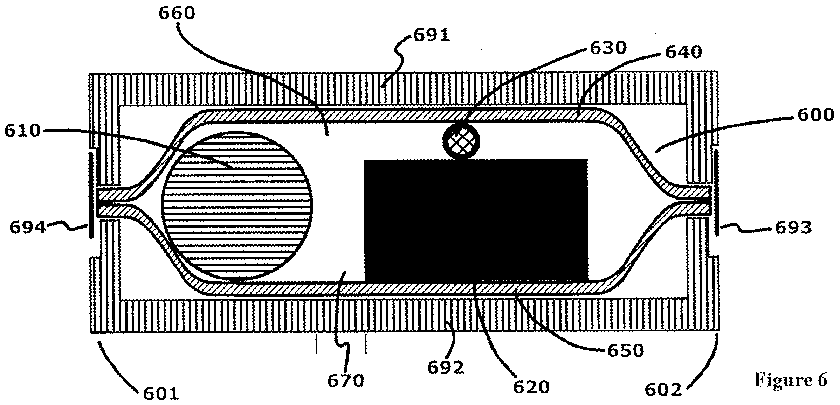

In FIG. 6, there is shown a cross-sectional view of an electrochemical battery cell 600. The electrochemical battery cell 600 possesses a cylindrical shaped electrochemical battery cell cathode current collector 630, which is shown positioned between the electrochemical battery cell cathode 620 and a first packaging portion. Although not shown, the electrochemical battery cell cathode current collector can alternatively be disposed entirely within or partially within the cathode 620. An anode 610 is located within the cell interior 660 at a predetermined distance 670 from the cathode 620. The cell interior is filled with electrolyte (not shown) to provide required ionic conductivity between the anode and cathode electrodes.

A method of joining both the first packaging portion 640 and the second packaging portion 650 along their respective peripheries can be described using FIG. 6. The electrochemical battery cell 600 can be placed within an ultrasonic welding fixture which is shown representatively in cross section surrounding a portion of the electrochemical battery cell 600. The ultrasonic welding fixture comprises both an ultrasonic welding horn 691 and an ultrasonic welding anvil 692. The electrochemical battery cell 600 is placed within the fixture and the ultrasonic welding horn 691 is brought into contact with the first packaging portion 640 at the locations where a weld is desired. In this methods embodiment, a weld is desired both at the anode side of the electrochemical battery cell 601 and at the cathode side of the electrochemical battery cell 602. A controlled pressure is applied by the fixture to the electrochemical battery cell bringing together the first packaging portion 640 and the second packaging portion 650. The ultrasonic horn is vibrated at a frequency appropriate for the material at the desired amplitude for a predetermined amount of time that is required to weld the first and second packaging portions. The controlled pressure may be maintained for a second predetermined time to allow the packaging portions to fuse. Prior art ultrasonic welding of plastics takes place with the motion of the ultrasonic horn largely perpendicular to the plane of the items being joined (for the side seal, along vector H shown in FIG. 2), and this results in a wide joint which is objectionable. Whereas it has been found that when the motion of the ultrasonic horn is largely in the same plane as the side seal (for the linear side seal, a plane extending along vector L shown in FIG. 2), a relatively narrower seal can be achieved. The vector of the horn's motion is in the same plane as the edge of the package being sealed. For nonlinear side seams (for example, arcuate side seams), the horn's motion relative to the side seam may vary at different positions along the side seam, but will remain in the same plane as the packaging being welded. Excess packaging can be mechanically trimmed at ends 693 and 694, for example, by laser-cutting, ultrasonic cutting, tool-die degating, or waterjet cutting) such that the packaging portions exterior the weld is removed. Alternatively, ultrasonic weld time can be extended so as to cut the sealed ends 693 and 694 while sealing the packaging portions . Once the packaging portions have been welded along the periphery thus sealing the electrochemical battery cell, the second controlled pressure is removed and the ultrasonic welding horn is retracted. By this joining process, many electrochemical battery cells can be consecutively sealed.

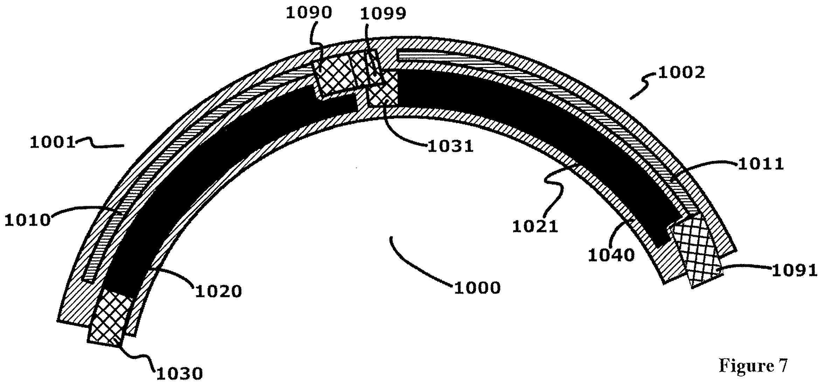

The present electrochemical battery cell configuration is not restricted to a linear, planar construction, and instead can be constructed in multiple shapes and sizes according to various embodiments. The components of the electrochemical battery cell, as well as the packaging, can be used to shape the electrochemical battery cell to its desired shape. In FIG. 7 there is shown the electrochemical battery cell 1000 in an arcuate shape. In this embodiment, two electrochemical battery cells are connected in series. A first electrochemical battery cell 1001 is both electrically and mechanically connected to a second electrochemical battery cell 1002 at a connection point 1099. Both the first and second electrochemical battery cells are shown resting on a first packaging portion 1040. Although not shown, a second packaging portion is associated with the first packaging portion to form a contiguous exterior packaging exterior for the electrochemical battery cell. The first electrochemical battery cell 1001 includes an anode 1010 and a cathode 1020. The cathode is positioned in electrical communication with a first electrochemical battery cell cathode current collector 1030. The second electrochemical battery cell 1002 similarly includes an anode 1011, and a cathode 1021. The cathode 1021 is positioned adjacent and in electrical communication with a second electrochemical battery cell cathode current collector 1031. Both the anodes 1010 and 1011 possess associated anode collector tabs which are both electrically and mechanically connected to an anode end so as to conduct electrons. At connection point 1099, there is shown an electrical and mechanical connection between the first electrochemical battery cell anode collector tab 1090 and the second electrochemical battery cell cathode current collector 1031. The connection can be welded or alternatively made so that electricity can flow between both the first and second electrochemical battery cells, and so that it provides a measure of strength so that the electrochemical battery cell 1000 is fixed in the desired shape.

Each of these components in the electrochemical battery cell extend along parallel arcuate paths or vectors. For example, the anode 1010 and the anode 1011 extend along an arcuate vector the length of which is approximately the length of the electrochemical battery cell 1000. The cathode 1020 and the cathode 1021 extend along a separate arcuate vector which extends in parallel to the anode vector. The electrochemical battery cell 1000 can be configured in the shown planar C-shape, or the arcuate shape can be nonplanar such as frustoconical or shaped to extend about a spherical segment such as in the body of a contact lens. The shape can be maintained by the rigidity of the components or alternatively by inclusion of a structural portion which would be included within the electrochemical battery cell but not be an active component of the electrochemical reaction. For example, a die cut titanium foil can be placed within the cell interior and intermediate the first and second packaging portions. The foil structural portion would act to maintain the desired shape of the electrochemical battery cell while not significantly increasing the non-active volume of the electrochemical battery cell.

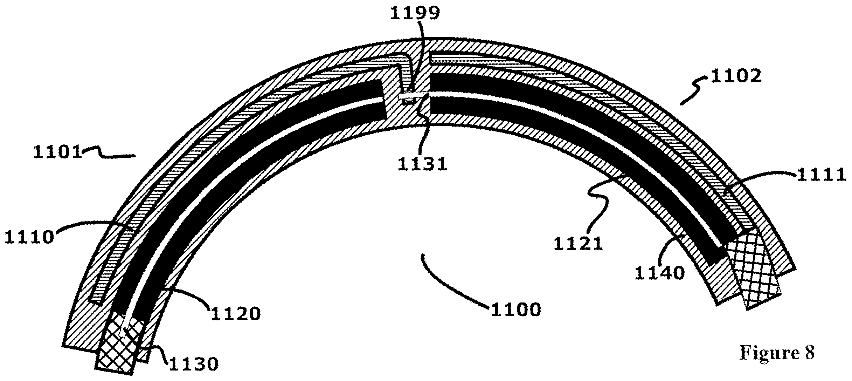

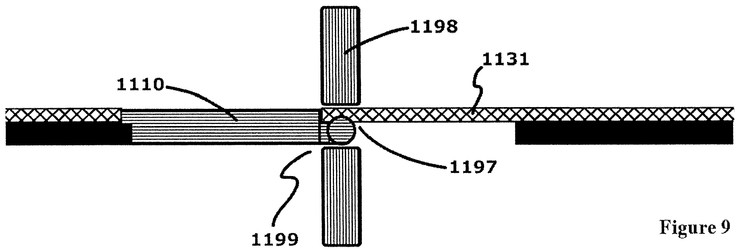

In FIG. 8, there is shown a top sectional view of an alternative embodiment of the electrochemical battery cell 1100. In this embodiment the electrochemical battery cell 1100 possesses a cylindrical shaped electrochemical battery cell cathode current collectors 1130 and 1131, which is shown positioned between the electrochemical battery cell cathode 1120 and 1121 and a packaging portion (not shown). Although not shown, the electrochemical battery cell cathode current collector can alternatively be disposed within or partially within the cathodes 1120 and 1121. The wire shaped cathode current collectors in combination with the wire shaped anodes provide a structural rigidity which obviates the need for any non-active structural portion. The two electrochemical battery cells 1101 and 1102 that comprise the electrochemical battery cell 1100 are electrically and mechanically connected at connection point 1199. The wire shaped first electrochemical battery cell anode 1110 and the second electrochemical battery cell cathode current collector 1131 can be joined by an ultrasonic weld as shown in FIG. 9. A compressive force holds the first electrochemical battery cell anode 1110 and the second electrochemical battery cell cathode current collector 1131 together while the ultrasonic welding fixture 1198, which is representatively shown, acts to weld the two wire shaped components to form a mechanically connected joint 1197. Alternatively, the joint 1197 can be created using resistive welding of another joining technique so as to create an electrically communicating and mechanically sound joint.

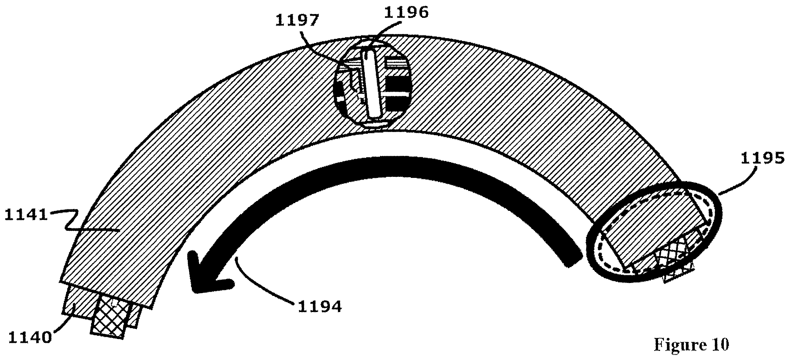

Another joining method useful to encapsulate the electrochemical battery cell is laser beam welding. In FIG. 10, the electrochemical battery cell 1100 is shown assembled with mechanically connected joint 1197 already formed and divider 1196 created to segregate the cell interior of the first and second electrochemical battery cells. A first and second packaging portion 1140 and 1141 of equal size are placed with their peripheries aligned and compressed to create a pressurized periphery along the entire periphery of the packaging portions. This can be done in a fixture which creates the pressurized periphery at the same time, or sequentially with a moving jig or fixture. While the periphery is compressed, a laser weld beam can be passed along the electrochemical battery cell (in the direction shown by vector W 1194) and the compressed periphery that passes through the laser weld beam is welded by being melted and then joined during re-solidification. The laser fires many heating pulses per second forming separate overlapping spot welds that form a seam along the packaging portion periphery. So as not to cause local heating of the cell interior, battery components and electrolyte an appropriate laser wavelength is chosen. For polypropylene packaging material, 800 nm laser light is preferred.

Another embodiment of the electrochemical battery cell 1100 in FIG. 8 can be described with an alternative anode construction. In this embodiment the two electrochemical battery cells 1101 and 1102 that comprise the electrochemical battery cell 1100 are electrically and mechanically connected by sharing a common component. The anodes 1110 and 1111 each additionally comprise an anode current collector which is electrically conductive. The active anode material is then disposed onto or adjacent each anode current collector so as to be in electrical communication, while maintaining physical contact with the anode current collector. The use of such an anode current collector enables it to also be used as a cathode collector in an adjacently connected cell. For example, the electrochemical battery cell anode current collector (not shown) of the first electrochemical battery cell 1101 can extend into the second electrochemical battery cell and be used as the cathode current collector 1131 of the second electrochemical battery cell. By use of this common cell component, the first electrochemical battery cell 1101 and the second electrochemical battery cell 1102 are electrically and mechanically connected without the need for any weld or joint.

### EXAMPLES

The compositions and processes described here, and ways to make and use them are illustrated in the following examples.

### Example 1

### Substrate Preparation

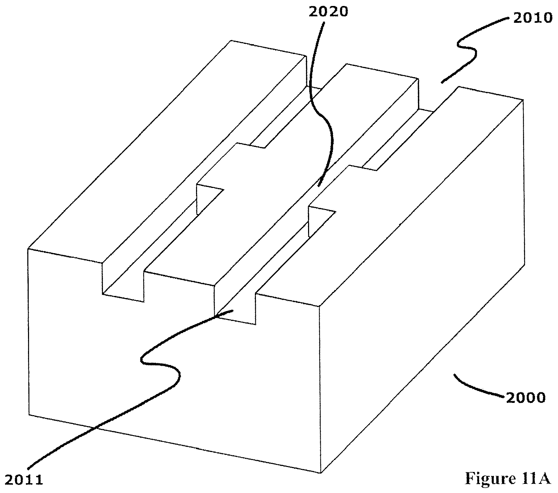

A polycarbonate block was cut into sections. First and second slots 2010, 2011 (each approximately 0.325 inch long x 0.008 inch deep x 0.0393 inch wide) were milled from the surface of the block 2000 as shown in FIG. 11A. A channel 2020 (between 0.007" wide and 0.01" wide) was then cut intermediate the first and second slots 2010 and 2011, connecting the two larger slots in line. Each finished slot is used to hold a cell.

### Cathode Preparation

A cathode sheet was prepared with a composition of 10% by weight of carbon black (e.g. ACE Black AB100 from Soltex, Houston, Texas, 83-85% by weight of fine electrolytic manganese dioxide (e.g. Tronox of Stamford, Connecticut) and the balance (5-7%) by weight PTFE (e.g. 60 wt% dispersion of PTFE in water, available as TE3859 from Dupont Polymers (Wilmington, Delaware) - has 60.6% solids in batch, 5.7% wetting agent) The sheet was prepared by combining the carbon black and manganese dioxide in a mixing container, and mixing at 1,000 RPM for 3 minutes in a Thinky mixer Model Number ARM-310 from Thinky of Laguna Hills, California. Then, roughly 1.05 grams of de-ionized water per gram of manganese dioxide was added to the mixing container, which was again mixed at 1,000 RPM for 3 minutes. Then, the PTFE was added, and mixed at 200 RPM in the mixer to disperse the PTFE, and then at 1,500 RPM to fibrillate the PTFE, forming a coherent mass.

The resulting coherent mass was then kneaded until the viscosity increases to the point where the material stiffness is increased and the material is formable. Pieces of battery packaging laminate consisting of a heat-resistant polymer outer layer, inner aluminum foil core, and heat-sealable polymer inner layer (e.g. packaging from Ultra Flex Corporation, Brooklyn, New York. The packaging consists of a 0.001" polyethylene heat-sealable layer on one side, a 48 gauge (0.0005") PET film on the other, and a 0.000316" aluminum foil layer in between the two) were cut, and folded lengthwise in half with the heat-resistant layer on the outside. Pieces of the coherent mass were broken off, and placed on the inside of the packaging folded lengthwise. The coherent mass was rolled down using a jeweler's mill; the material was periodically folded back on itself to enhance the fibrillation and bonding, and at times the material was rotated 90 degrees in position against the packaging to avoid its spilling out over the edge. Sheets of roughly 150 micron thickness were prepared in this manner from the cathode mix. This sheet was removed from the packaging material, placed on a weigh boat, and air-dried at room temperature for a few hours. Finally, the sheet was dried at 60°C between a few hours and overnight.

### Electrolyte Formulation

The electrolyte was first prepared using a mixture of 1.9 M NH₄Cl and 0.63 M CaCl₂ In deionized water.

A gelled electrolyte was then prepared, as follows: an amount of electrolyte was added to a beaker containing a stir bar. This beaker was covered to prevent evaporation, and heated and stirred on a stirring hot-plate until boiling. De-ionized water was then added to replace the water which had evaporated as determined by weighing. Sufficient agar was added to the beaker to produce a mixture containing 97% by weight of the electrolyte, and 3% by weight of agar. The electrolyte with agar was stirred on the hot-plate until the agar dissolved, then de-ionized water was added to replace the water which had evaporated. The mixture was then stirred and allowed to cool to room temperature, forming a soft, cloudy gel.

### Anode

Commercial pure zinc wire (e.g. (0.006" pure zinc 99.95% wire from California Fine Wire of Grover Beach, California) was obtained.

### Cathode-Current Collector Assembly Procedure

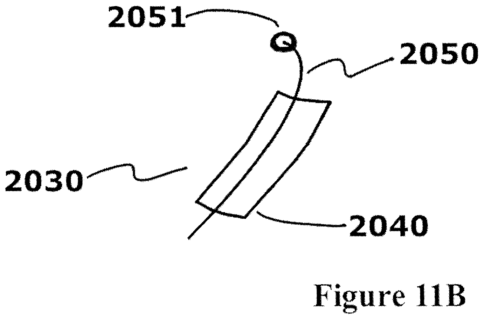

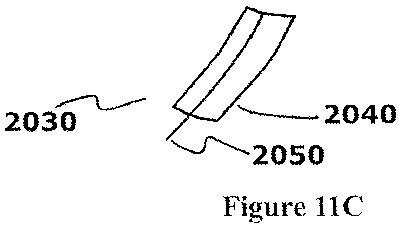

Strips of cathode material roughly 7 mm long were cut from a roughly 150 µm thick piece of cathode material using a blade. Then, thinner strips up to 3 mm or so wide (but at least 600 µm wide) were cut from these strips. Short lengths (roughly 2 cm to 10 cm) of 0.002 inch diameter titanium wire (e.g. 0.050 mm 99.8% pure, hard temper titanium wire from Goodfellow of Coraopolis, Pennsylvania) were cut from a roll, and their ends were attached to a plastic weigh boat with a small dot of epoxy, which was allowed to cure. The assembly of the cathode is illustrated in FIG. 11B. The cathode strips 2040 were placed beneath the wire 2050 glued at one end 2051, and the wire was held taut over the strip. With the wire held taut, a conductive glue coating (e.g. prepared containing a polymeric binder and graphite flakes e.g. TIMCAL E-LB 1020, from Timcal of Westlake, Ohio). After the conductive coating was dried enough to hold the wire 2050 to the surface of the cathode sheet 2040, the end of the wire held taut was released. After the coating was dried in air for a few hours, the wire was cut away from one end 2051 of the assembly using a blade, the other end of the wire was trimmed to a shorter length, and the cathode strip 2040 was cut to a width of between 400 and 800 µm - see FIG. 11C.

### Cell Assembly Procedure

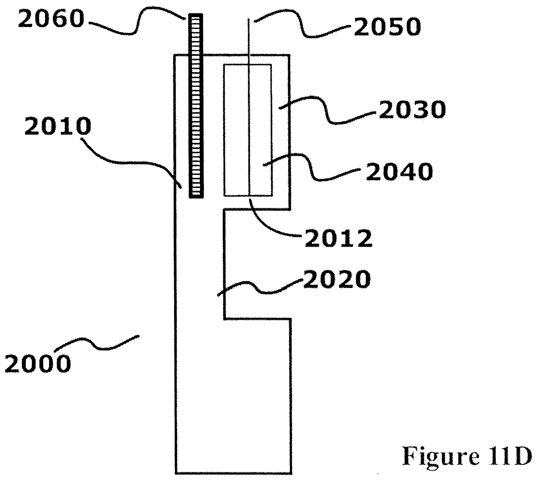

The cathode-current collector assembly was glued into the plastic substrate 2000 as shown in FIG. 11D using the conductive coating/glue. The cathode-current collector assembly 2030 was set in place with the wire facing down, to enable wetting the cathode strip 2040 later. The cathode-current collector assembly 2030 was first attached at the end 2012 of the slot 2010; the cathode -current collector assembly 2030 was then flexed away from the wall of the slot, additional conductive glue applied along the wall, and the cathode-current collector assembly 2030 pressed against the wall of the slot. If excess cathode material was present which would prevent clearance between the zinc wire 2060 inserted later and the cathode, the excess material was removed.

Lengths of the zinc wire approximately 1.5 centimeters were cut and straightened. They were placed in the slot 2010 and extended out the open end of the cell; a small amount of epoxy was applied to hold the wire in place. Then, epoxy was applied across the channel opening of the slot, and polyimide tape (e.g. Kapton Brand) was placed over the opening of the slot until the epoxy had cured. At that point, the polyimide tape was removed. Then, electrolyte was applied to cover the slot, and allowed to soak into the cathode. An absorbent paper wipe was then used to remove all of the electrolyte from the slot and the area of the substrate surrounding the slot, except for that absorbed within the cathode. Gelled electrolyte was then added to fill the slot. A piece of polyimide adhesive tape (e.g. Kapton Brand) was placed over the top of the slot including the end; this tape would normally extend end-to-end with two cells vertically in place.

Then, two-part epoxy was used to cover over top of the polyimide tape, and also to cover the ends of the block where the wires exit the slot. Once the epoxy was cured, the polycarbonate substrate was secured. Then, smooth-jawed alligator clips were used to clip onto the wires (titanium and zinc) coming out of the cells, taking care not to short the cells. Insulator was placed between the clips to prevent them from touching. The insulators were removed after the epoxy had gelled, but before it was fully hardened. The cells were tested using ordinary battery test equipment.

Table 1 is the performance and general description of the electrochemical battery cell which was prepared as described in Example 1.

**TABLE 1**

| | |
|---|---|
| Capacity | 140 µA-h at 10 µA |
| Resistance | ∼800-1500Ω (typical) at 100 µA |
| Cell dimensions (slot in substrate) | 0.325 inch long x 0.008 inch deep x 0.0393 inch wide (∼0.03 inch wide)-roughly 8.3 mm x 200 µm x 1mm (∼1.7 µL) |
| Open Circuit Voltage | 1.5V (nominal) |

### Comparative Example 2

### Zinc Powder Anode

An anode using zinc as a bound powder was prepared. Zinc powder (e.g. EEF grade from Umicore, Belgium) was prepared using PTFE (from TE3859 dispersion) as a binder, and using Acetylene Black (AB100%) as a conductive filler, with a composition of 5% acetylene black, 5% PTFE, and 90% zinc by weight. 20 grams of zinc were mixed by hand with 1.11 grams of acetylene black using a plastic spatula to form a visually homogeneous mixture. This mixture was then mixed using a Thinky ARM-310 mixer for three minutes at 1000 RPM with 9 grams of de-ionized water. Then, 1.85 grams of 60% PTFE (TE3859) dispersion were added to the mixture, which was mixed for three minutes at 200 RPM to disperse, then three minutes at 1000 RPM to fibrillate to form a coherent mass. This coherent mass was then kneaded and rolled between pieces of battery packaging (from Ultra Flex Corporation, Brooklyn, New York. The packaging consists of a 0.001" polyethylene heat-sealable layer on one side, a 48 gauge (0.0005") PET film on the other, and a 0.000316" aluminum foil layer in between the two). As with the cathode sheet preparation, pieces of this laminate were cut, and folded lengthwise in half with the heat-resistant layer on the outside. Pieces of the coherent mass were broken off, and placed on the inside of the packaging folded lengthwise. The coherent mass was rolled down using a jeweler's mill; the material was periodically folded back on itself to enhance the fibrillation and bonding, and at times the material was rotated 90 degrees in position against the packaging to avoid its spilling out over the edge. Sheets of roughly 150 micron thickness were prepared in this manner from the cathode mix. This sheet was removed from the packaging material, placed on a weigh boat, and air-dried at room temperature for a few hours. Finally, the sheet was dried at 60°C between a few hours and overnight.

Strips of the anode material approximately 300 microns wide x 150 microns thick x 7-8 mm long were cut out, and then attached using the conductive glue (Timcal E-LB 1020) to 50 micron titanium wire current collectors (e.g. from Goodfellow, Coraopolis Pennsylvania), as was done using for the cathode.

A cathode sheet consisting of 10 wt% acetylene black (AB100), 5 wt% PTFE (from TE3859 dispersion), and 85% fine MnO₂ (Tronox) was prepared as described in Example 1. Strips of material roughly 10 mm wide x 150 µm thick were cut from this sheet. Pieces of titanium foil were cut, and transparent tape was applied to leave an approximately 7 mm wide strip of bare foil. This foil was then painted over with conductive glue, and a strip of the cathode sheet was pressed in while the glue was still wet. After drying for roughly two hours to overnight at 60°C, the foil was removed from the oven, and cut into strips and inserted into an experimental holder; these strips with attached cathode acted as the counter-electrode.

The experimental sample holder had a piece of zinc foil used as a quasi-reference electrode, the bound zinc sheet attached to the 50 µ titanium wire acting as the working electrode, and the titanium foil with cathode sheet attached was the counter electrode. All three electrodes were together in a glass vial containing 1.9 M NH₄Cl and 0.63M CaCl₂ in de-ionized water electrolyte. A test was performed on three samples, consisting of alternating open-circuit periods of 30 seconds with pulses of 5, 10, and 100 µA applied to the working electrode, followed by an open-circuit period of 30 seconds. The internal resistance of each electrode was taken as the average of the resistance determined from the voltage drop at the beginning and end of the 100 µA pulse. The three samples had resistances of 101, 183, and 145 Ω.

### Comparative Example 3

### Sealed Micro-Battery Construction

### Forming Cell Components:

The cell components of the micro-battery assembled in this example are further described by the dimensions and other physical properties in Table 2.

**TABLE 2**

| | |
|---|---|
| Micro-battery dimensions | 10 mm in Length, 1.1 mm in width, 0.25 mm in thickness |
| Micro-battery volume | 2.75 cubic millimeters or 0.00275 cc |
| Anode dimensions | 7 mm in Length, 0.15 mm in width, 0.075 mm in thickness |
| Cathode dimensions | 7 mm in Length, 0.55 mm in width, 0.12 mm in thickness |
| Anode collector thickness | 0.03 mm in thickness |
| Cathode collector thickness | 0.03 mm in thickness |
| Electrolyte Volume | 0.000642 cc |
| Separator thickness | 0.030 mm |
| Packaging (each layer) thickness | 0.025 mm |

### Preparing cathode sheet:

The cathode is prepared as follows. First, the dry powders are mixed using a Waring laboratory blender. MnO₂ (Tronox fine) and BP2000 carbon black (Cabot) are mixed in a 500g: 20.83 g ratio (24:1).

Once the powders have been blended, they are then transformed into a wet blend together with PTFE. The overall blend composition is 24.27 % dry powders (as mentioned above), 66.50% de-ionized water, 4.86% Triton X-100 solution, and 4.37% solution (DISP30, 60 wt% PTFE). The wet blend is then filtered using a Buchner funnel under vacuum.

After the solid mass has been prepared, it is repeatedly rolled using a jeweler's press, pasta roller, or similar to fibrillate the PTFE chains further. After each rolling step except for the last, the solid mass is re-constituted to prepare for the next step.

A custom motorized roller setup is used to transform the dough into a freestanding sheet. The material is fed through the rollers a number of times, folding the material back onto itself each time, and the gap between the rolls is reduced until the gap is 0.12mm. After this, the material is allowed to air-dry.

After the cathode is in the form of a freestanding sheet, this sheet is then attached to a current collector using an adhesive (such as EB-012 sold by Henkel, or E-LB 1020 sold by Imerys). The titanium foil current collector may be roughened by, for example, immersion in a boiling 10 weight% oxalic acid solution for ten minutes. After roughening, the titanium foil is removed, rinsed with de-ionized water, and allowed to dry thoroughly.

An Epilog FiberMark 50W pulsed Ytterbium fiber laser is used to cut titanium foil (10 micron thickness) into strips which are 400 µm wide. The strips of cathode material are cut to the desired width, and coated with EB-012 on one side. The coated side of the cathode material is pressed onto the cut titanium. Afterwards, the laser is used to cut the titanium and cathode into individual freestanding components.

An electrolyte gel is prepared consisting of 25 wt% zinc acetate, 0.2 wt% ammonium acetate with the balance water, gelled with 6 wt% CMC (GA07 Walocel).

If desired, the cathode strip may be laminated to a separator. To accomplish this, a cathode strip on titanium is coated with electrolyte get and a piece of separator (25 µm thick Dreamweaver Silver™, available from Dreamweaver International, Greer, South Carolina) slightly wider than the cathode is placed on top of the gelled electrolyte. The cathode and separator are placed between two pieces of FEP (fluorinated ethylene propylene) film, and the entire stack is then placed between two" thick brass shim pieces. The stack is then run through an Apache AL-13P laminating machine so that the cathode and separator are mechanically bonded together.

The anode consists of a piece of zinc foil which is cut to size using a technique such as laser or ultrasonic cutting. Optionally, the zinc may be glued to a piece of roughened titanium foil using a conductive adhesive prior to cutting; the roughened titanium foil serves as the current collector for the anode. The glue used may be a carbon-filled thermoset resin such as Atom Adhesives AA-Carb 61. In the case where a thermoset resin is used, it is applied to either the zinc or the titanium. It is also possible to apply a thermoplastic resin paste, ink, or coating, such as Creative Materials (Ayer, Massachusetts) 107-25, to one side of a zinc strip and a titanium piece, and then to apply heat and pressure to join the two together.

In some cases, it is desirable to have two cells in series sharing a current collector, which acts as the anode current collector for the first cell and the cathode current collector for the second cell. In this case, the anode is attached to one part of the current collector as described above while the cathode is attached to the other side of the current collector, allowing bare current collector on either end to enable feedthroughs.

### Coated Film:

Coated packaging film refers to a polymeric film adjacent to a film with a higher barrier than that of the polymeric material, and where the said higher barrier film is formed on the polymeric film or resides on an adjacent layer. The ceramic film may be silicon oxide, aluminum oxide, titanium oxide, aluminum, gold, titanium, or the like, and the film may be formed by CVD, sputtering, plasma deposition, sol-gel, and the like. Optionally, the coated film may include alternating layers of polymer and higher barrier film deposited onto the initial higher barrier film. A preferred example of the packaging film used is Ceramis CPP-004 (CelPlast, Toronto, Canada), which is polypropylene coated with a silicon oxide barrier layer.

### Packaging the Cell:

In general, the cell is normally sealed between two pieces of polymer film, either coated or uncoated, which form the top and bottom of the packaged cell. The first step in manufacturing the cell is to lay down the cathode and cathode collector onto the package, so that the cathode collector is in place on the package. It is helpful to mechanically hold the cell components in place during sealing, so that they do not shift to cause a short or interfere with the sealing process. For example, it is possible to attach the cell components to one of the packaging films using a lightly tacky pressure sensitive film, such as 3M 80 spray adhesive or Krylon Easy-Tack. One may also envision using a mechanical clamp of some fashion to hold the cell components in place during the sealing process. Once the cathode and collector are in place, the cathode is wetted with electrolyte. The cathode may optionally be laminated to a separator prior to cutting; if this is not the case, a piece of separator is mechanically placed on top of the wet cathode, and if necessary more electrolyte is applied.

At this point, the anode, (and optionally the anode collector; the combination will be referred to as the anode assembly) is then added to the cell. If the cathode is not laminated to a separator as described above, the anode assembly may be placed beside the cathode, and separated from the cathode by the separator to prevent electrical shorting. Alternatively, whether or not the cathode is laminated to a separator, the anode assembly may be placed on top of the cathode and separator. In either case, it is preferable for the separator to be wider than the cathode (or, in the case where the cathode is laminated to the separator, equal in width to the cathode), and for the anode assembly to be narrower than the cathode. Once the anode, cathode, and separator are in place, the cell is ready to be sealed, together with the top layer of packaging.

The cell package has two kinds of seals - "feedthroughs," and "sides." Feedthroughs are located on the shorter axes of the cell, while sides are located on the longer axes of the cell (where said axes may be linear, arcuate, or some other shape.) The functional difference between feedthroughs and sides is that sides only need to act as a hermetic seal, while feedthroughs need to act as a hermetic seal and also enable an electrical terminal or terminals to extend through them. If the shorter axis of the cell is very small (for example less than 1.5 mm wide but generally greater than 300 microns wide), sides need to be much narrower than feedthroughs to prevent an unacceptable internal volume loss. In general, the sides can be between 20 µm wide and 200 µm wide, dependent on the length of the shorter cell axis. At the same time, it is possible to add material to the thickness of the feedthrough (such as a dry film, coating, or adhesive) to ensure that the feedthrough is hermetic even though it has to go around the current collectors. It is acceptable to have the feedthrough seal occupy a greater length, because of its location on the longer axis of the cell which is generally at least 4 mm long.

Positioning of the electrodes relative to the seams is critical when dealing with such small components. In general, the position of the side seams and electrodes should be within 5% of the width of the battery. For example, for a 1 mm wide battery electrode and side seam positions would have a tolerance of less than about ±0.05 mm. For the length of the battery, the tolerance of the position of the bare part of the terminal which goes through the feedthrough, the feedthrough adhesive, and the feedthrough sealing mechanism should have a tolerance of roughly 25%. For example, for a 1 mm wide seal the positioning should be within ±0.25 mm. Note that the width of the bare terminal (the cathode collector which is not coated with cathode material, and the anode collector which is not covered by the anode) must extend the length of the feedthrough seam.

Thus, different sealing methods are needed for the sides and the feedthroughs. For sealing of the sides, ultrasonic welding is preferred. Prior art ultrasonic welding of plastics takes place with the motion of the ultrasonic horn largely perpendicular to the vector of the seal, and this results in a wide joint which is objectionable. If the oscillation motion of the ultrasonic horn is predominantly in the same plane as the packaging material, a relatively narrower seal can be achieved.

Alternatively, laser welding has been used to produce a seal width of under 40 µm.

After welding the side seams, it is necessary to cut through the packaging film around the sides in order to separate out the battery package. In some cases, it is possible to simultaneously weld and cut the side seams. For example, it is possible to simultaneously seal and cut plastic films with a seal width of under 50 µm using ultrasonic welding when the direction of the vibration is nearly parallel with the plane of the packaging material. The vector created by the direction of sealing, which in the case of the side seal is along the length of the battery package. However, in certain cases it may be preferable to seal the side seams in a first step, and then use another step to remove the packaged cell from the packaging film. This second step can utilize waterjet cutting, ultrasonic cutting, laser-cutting, tool-die degating, or the like.

For the feedthrough, it is necessary to completely close off the package around the current collector that extend through the packaging. Because the active materials do not extend into the feedthrough area, it is possible to add appreciable thickness to the packaging within this area. For example, for a cell which is 250 microns thick with 25 micron packaging, roughly 200 microns of material may be added to the feedthrough area to enhance sealing.

A first alternative is to coat the current collectors and/or the packaging with a polymer latex, such as Dow Hypod, Mitsui Chemipearl, Aquaseal X 2088, or Joncryl prior to heat sealing. Another alternative is to add a dry polymer film, such as is manufactured by Fastel, to the seal area. A heat sealable polymer may also be applied (for example, by screen printing) to the inner surface of the packaging as a dispersion. Yet another alternative is to apply a tacky film, such as Asphalt, Conseal 1400 (Fujifilm Hunt), or Henkel PM040 to the packaging and/or current collectors in the feedthrough area to enhance heat-sealing, or apply a curable thermoset adhesive, such as a two-part adhesive, a heat-cured adhesive, or a UV-cured adhesive, in the feedthrough area. For some embodiments, it may be necessary to cut through the adhesive for the feedthrough while welding the sides; this may be accomplished by ultrasonic welding, which is known to remove contamination from the weld area. This is because it is necessary for the feedthrough seal to seal around the terminals of the cell, without any gaps.

In some cases, the feedthrough adhesive (polymer latex, heat seal film, tacky film, or thermoset adhesive) may be applied before the pressure sensitive adhesive described above, and in some cases it may be applied after, depending on the properties of the heat seal adhesive. In the case of using a curable adhesive, once the heat seal adhesive is in place, the sides of the cell can be sealed using a technique such as ultrasonic welding or laser welding using a fixture to substantially exclude electrolyte from the side seal, followed by curing the adhesive in place to create the feedthrough.

### Comparative Example 4

To reduce the ingress of water into or out of the cell, the osmotic pressure difference between the cell and its surroundings should be reduced. The osmotic pressure may be approximated using the Morse Equation, P = Σ iₙMₙRT, where P is the osmotic pressure, T is the absolute temperature, R is the ideal gas constant, Mₙ is the concentration in moles per liter of the n^{th} component of the mixture, and iₙ is the number of ions per formula unit obtained upon dissolution of the n^{th} component of the mixture. The difference in osmotic pressure between two solutions may be expressed as the difference in P, as defined above. Preferably, this difference should be less than 25 atmospheres, or more preferably less than 11 atmospheres.

We prepared an electrolyte solution of 25 wt% zinc acetate and 0.2 wt% ammonium acetate with the balance comprising de-ionized water (referred to as the "stock solution"). We also produced two diluted electrolyte solution which will be referred to as the 6.25% zinc acetate solution (1:3 ratio from stock solution) and 1.8% zinc acetate solution (1:13 ratio from stock solution). The solution which the battery is stored in proximity to is a saline solution with a composition of 0.824% sodium chloride, 0.893% boric acid, 0.23% sodium borate, and 0.01% sodium ethylenediamine tetraacetate (EDTA) by weight, with the balance comprising de-ionized water; this will henceforth be referred to as "packing solution." An additional electrolyte was made comprising 0.822% sodium chloride, 1.463% boric acid, and 0.011% sodium borate by weight, which will henceforth be referred to as "modified packing solution." The osmotic pressure relative to the packing solution as calculated using the Morse Equation is given below in Table 4.

### Test Results for Different Solutions

Cells were prepared to establish performance of the various electrolytes. Each cell used a piece of card stock as a backing to provide stiffness, and the packaging consisted of a 0.001" polyethylene heat-sealable layer on one side, a 48 gauge (0.0005") PET film on the other, and a 0.000316" aluminum foil layer in between the two (Ultra Flex Corporation, Brooklyn, New York). To enable heat sealing of the battery, pieces of dry heat sealable polymer film (Fastel Adhesives & Substrate Products) were used, with a window of 9 mm x 1 mm cut out of one piece within the cell to hold the battery components. The anode was cut out of 0.075 mm thick zinc using an Epilog Fibermark laser; said anode was comprised of a strip which was 0.25 microns wide. The cathode was prepared as described earlier with a composition of 85% MnO₂, 10% carbon black, and 5% PTFE by weight. The cathode was laminated to a cut titanium piece as described above. For these tests, the cathode was 400 µm ±5% wide x 130 µm ±5% thick x 8.5 mm ± 0.5 mm long. The anode and cathode were placed into the window in the dry heat sealable film such that they were not in physical contact with each other.

To fill the cells, electrolyte was added to wet the cathode. Gelled electrolytes prepared by mixing the electrolytes above with between 1.8 and 5% by weight Walocel GA07 (Dow Chemical Company) were added to fill the window within the dry film, and the cell was packaged using heat sealing, with packaging film on both sides of the cell. The cells were tested using a VMP3 (Bio-Logic) with a test protocol of a 20 µA constant current discharge down to a cutoff voltage of 0.9V. The internal resistance was measured as the voltage drop obtained from an initial 20 µA pulse lasting three seconds prior to discharging the battery.

In addition to electrochemical data, gassing data were obtained to semi-quantitatively establish projected shelf life in the various electrolytes. Gassing was obtained by cutting 0.075 mm thick zinc into 0.13 mm wide strips using an Epilog Fibermark laser, which were added to glassware designed to obtain gassing rates. This glassware consists of a volumetric flask filled with electrolyte solution, which is in contact with the zinc strips. This flask is sealed with a wax-coated glass stopper. A graduated section is attached and open to the neck of the volumetric flask, with an opening exposed to ambient atmosphere; when hydrogen gas is evolved it collects below the wax-filled section, which forces electrolyte up into the graduated section, allowing the gassing rate to be determined by measuring the position of the electrolyte in the graduated section at different times. The wide portion of the flask was held in a heated bath held at 45 °C, and the gassing rate was determined based on the rise in electrolyte in the graduated section. Because zinc corrosion is one of the major factors impacting shelf life in carbon-zinc batteries, the gassing rate may be taken as a proxy for shelf life assuming that zinc corrosion is the main factor limiting shelf life.

Data is summarized in Table 3 below. As the cathode is the electrode limiting capacity, data are normalized volumetrically to a cathode size of 400 µm × 8 mm × 130 µm. Each data point is the average of ten cells tested. Notably, for those solutions containing zinc acetate the pH increases with decreasing concentration, while gassing rate decreases, and a substantial capacity is retained. Furthermore, gassing is low in packing solution and modified packing solution, even in the absence of zinc.

**TABLE 3**

| Electrolyte | pH | Open-circuit voltage | Resistance, Ω | Osmotic pressure, atmospheres | Capacity, µA-h | Gassing rate, mL/g-day |
|---|---|---|---|---|---|---|
| Stock solution | 5.94 | 1.530 | 1080 | 75 | 180 | 0.798 |
| 6.25% Zinc acetate solution | 6.27 | 1.518 | 1312 | 10 | 160 | 0.521 |
| 1.8% Zinc Acetate Solution | 6.79 | 1.511 | 2431 | -5.0 | 90 | 0.500 |
| Packing Solution | 7.52 | 1.419 | 5040 | 0 | 80 | 0.158 |
| Modified Packing Solution | 6.04 | 1.513 | 2840 | 1.8 | 120 | 0.189 |

### Exemplary Component Compositions

A wide variety of compositions can be used in the electrochemical battery cell. Any combination of components would be selected for electrochemical compatibility, and for the ultimate use of the electrochemical cell. For example if biocompatibility is required, components would be thus selected.

Approval of medical devices by regulatory agencies require that a biocompatibility assessment be conducted to assure safety of the device or material. Biocompatibility classification is thus obtained by testing according to certain guidelines, including ISO 10993, "Biological Evaluation of Medical Devices," and the Japan Ministry of Health, Labour and Welfare (MHLW) "Testing Methods to Evaluate Biological Safety of Medical Devices," Notice from the Office Medical Devices. The testing of the biocompatibility of a device is intended to demonstrate that the device should not, either directly or through the release of its material constituents: (i) produce adverse local or systemic effects; (ii) be carcinogenic; or (iii) produce adverse reproductive and developmental effects. Some materials have been well characterized chemically and physically in the published literature and in the marketplace and have a long history of safe use. Such materials can be considered biocompatible and are thus preferred. Materials that are used in medical device batteries can affect a human eye by touch, leak from the battery due to, for example, an accident or an improper sealing of the battery. Use of biocompatible materials minimizes any risk of such complications occurring if the leaking or leached materials make contact with the eye or other human tissues.

The anode is the electrode component which is oxidized in the electrochemical battery reaction. In one embodiment, the anode comprises zinc as the active component in the form of a contiguous wire or thin cylinder. The zinc is preferably battery grade in that it is free from impurities generally understood by those skilled in the art to promote corrosion and other undesirable side reactions in the battery. The zinc may also be alloyed with alloys such as bismuth, indium, calcium, or aluminum so as to increase shelf life. Lead in small amounts has also been shown to be an effective zinc alloy material. Although thought of as non-biocompatible, the lead stays within the zinc grain boundaries and is not dissolved in the electrolyte. Thus, such added lead may not create a biocompatibility issue. The anode wire also acts to collect the electrons flowing from the anode and transport them out of the electrochemical battery cell. To accomplish this dual role, excess anode is preferably added to the battery to ensure the anode remains contiguous. Zinc powder can be used as an alternative anode material as is shown in Example 2.

The cathode is the electrode component which is reduced in the electrochemical battery reaction, and when the electrochemical battery cell is placed in a circuit with a load, the cathode attracts electrons from the circuit. The preferred cathode material may be manganese dioxide which is mixed with a conductor additive and binder to form a cathode mix. It may be preferable to include as much manganese dioxide in the cathode mix to maximize the capacity of the electrochemical battery cell and to reduce the necessary size of the cathode. The amount of cathode in the electrochemical battery cell is determined relative the anode and its active amount. The molar amounts of each the anode and cathode are determined so that the cell reaction can be accomplished for the desired duration. The form of the cathode is planar in one embodiment, but can be cylindrical in an alternative embodiment. The cylindrical cathode can be extruded or otherwise shaped while being formed.

The conductor is used to enable electron flow between cathode particles and from and to the cathode current collector. The amount of conductor is preferably minimized so as to accomplish this task as there is little benefit to adding excess conductor. Conductors appropriate are graphite, expanded graphite, acetylene black, carbon black, and other conductors known by those skilled in the art. Preferably acetylene black is used in the present invention as it provides the cathode mix a desired level of electrolyte absorptivity.

Binder is used in the cathode mix to provide structure to the cathode throughout the electrochemical battery cell life. The binders ability to provide this structure should not be altered by the electrolyte or by the expansion of the manganese dioxide. Preferred binders include particulate Teflon® (PTFE) emulsion which can be fibrillated during mixing of the cathode mix.

The cathode mix electrically communicates with the cathode collector, and the purpose of the cathode collector is to both electrically communicate electrons to and from the cathode but to also provide structure to the electrochemical battery cell. A titanium wire is the preferred structure for the cathode collector as it adequately conducts and has the required rigidity in small diameters. Titanium mesh, titanium ribbon, expanded mesh, braided wire all are alternative cathode collector materials.

Electrolyte is selected for compatibility with the reactive electrode materials. For the zinc anode and a manganese dioxide cathode, a LeClanche electrolyte, or ammonium chloride NH₄Cl solution, zinc chloride ZnCl, zinc acetate and mixture thereof, are one embodiment. For dilute solutions, acetate electrolytes, which contain zinc acetate and optionally other acetates such as ammonium acetates, are preferred due to zinc chloride's solubility behavior. Salines, such as sodium chloride NaCl, magnesium chloride MgCl₂ and potassium chloride KCl solutions together with additives such as sodium borate, boric acid and sodium ethylenediamine tetraacetate can alternatively be used. For the gelled electrolyte, carboxymethyl cellulose, agar, or an alternative gelling agent can be used. The gelling agent is to increase the viscosity of the electrolyte so that it remains within the cell at a location where it is useful, namely between the anode and cathode.

The gelled electrolyte can be located throughout the cell interior of the electrochemical battery cell, and is most preferably located between the anode and cathode which are disposed relative each other by a predetermined distance. This predetermined distance can be calculated by those skilled in the art, but the distance should allow for tolerances necessary to prevent short circuits caused by the anode and cathode coming in contact with each other. As there is no separator or other physical barrier between the electrodes, a practical distance is necessary in this embodiment. The gelled electrolyte viscosity does act to hinder movement of the electrodes and its placement between the electrodes both acts to enable ionic communication and to prevent movement of the electrodes towards each other. The gelled electrolyte can also enhance biocompatibility, by providing a physical barrier around the electrodes. Particles moving from the electrodes are caught in the gelled electrolyte and prevented from moving away from the electrochemical battery cell or towards the other electrode. In another embodiment a thin barrier may be placed between the anode and cathode to prevent relative contact. The thin barrier may be made of a separator material or an ionically conductive and electronically insulating material.

An anode tab can be mechanically connected to the anode so that it can electrically transport created electrons from the anode to the negative terminal of the electrochemical battery cell. Using an extension of zinc wire for this purpose may corrode or otherwise affect biocompatibility. Therefore titanium or other corrosive resistive conductive materials are appropriate to extend the anode through any packaging material to provide the required external electron conduit.

The electrochemical battery cell may be enclosed in a packaging material to enclose the cell components so as to enhance shelf life, restrict ionic, oxygen, and water migration into and out of the cell, and to ensure biocompatibility. As the packaging material is inert and plays no role in the performance of the battery, minimizing the thickness and amount of the material is preferred. A material that is inert and does not interfere with the cell reactions is also preferred as is a material that is easily formed into a contiguous exterior around the entire electrochemical battery cell while enabling sealing of the terminal electrodes which necessarily penetrate the packaging and protrude from the packaging. The packaging material is also preferably easily formed and sealed by high speed manufacturing processes. Pigmentation of the packaging material may also be desired and this requirement may inform the packing material selection. Polypropylene is preferred as a packaging material in that it is easily weldable via a variety of processes including heat, ultrasonic and laser welding. In addition, polypropylene is adhesive-bondable and available in a variety of thicknesses and densities. In addition, polypropylene is impervious to the preferred electrolyte compositions and will contribute to biocompatibility. Alternative biocompatible polymers such as polyurethane, polyvinylpyrrolidone, silicone elastomers, polyethylene, polytetrafluoroethylene, poly-(p-phenyleneterephthalamide), polyvinyl chloride, polypropylene, polyolefms, polyesters, polyacrylates (including polymethacrylates).

The battery exterior or the exterior surface of the packaging material can also be coated to further render it biocompatible. Appropriate biocompatible coatings include phosphorylcholine and poly-para-xylylenes, such as paralene C.

The coated film used as a packaging material must serve at least two barrier functions, in addition to acting to maintaining the physical integrity of the battery. The film must prevent migration of salt ions, to prevent the loss of electrolyte ions in the event that the battery is surrounded by liquid. The film must also retard water transport, to prevent swelling of the battery. For the case where the battery is enclosed in a sealed package prior to use, the prevention of oxygen transport is not a critical need; however, those skilled in the art will recognize that the same sorts of coatings used to retard moisture transport will also substantially retard oxygen transport.

Within the packaging industry, the permeability to water is normally measured by subjecting one side of a barrier film to a given relative humidity while keeping the other side dry, for example by purging with dry gas, while maintaining a constant temperature, and measuring the water transmitted across the film from the side with controlled relative humidity to the dry side expressed in terms of water vapor transmission rate (WVTR), with units of mass/area^{∗}time at a given temperature and relative humidity. For example, the units may be expressed as g/m²-day at temperature in degrees Celsius and relative humidity. For the preferred embodiment, the WVTR of the packaging should be less than 1 g/m²-day, or more preferably less than 0.1 g/m²-day, or still more preferably less than 0.02 g/m²-day, where said WVTR is measured at between 85 and 100% Relative Humidity and between 20°C and 40°C. Instruments for performing such tests are available from, for example, MOCON Inc. (Minneapolis, MN)

It should be noted, however, that conventional WVTR measurements will only measure moisture transport normal to the barrier film, i.e. through whatever barrier coating may be present. Given a sealed package, however, it is possible for moisture to transport through the seam, i.e. parallel to the plane of the barrier film. This is especially relevant where the seam of the package is particularly narrow, for example less than 100 microns wide. Thus, the barrier property of the polymer film itself, rather than the coating, dominates the transport behavior of the side seam, which can make a nontrivial contribution to overall moisture transport into and out of the battery particularly for very small batteries, for example those with a package having a surface area of 0.5 cm² or less. Therefore, it is preferable for the WVTR of the polymer to be less than 10 g/m²-day, or more preferably less than 5 g/m²-day at a thickness of 25 microns, a temperature between 20°C and 40°C, and a relative humidity between 85 and 100%.

Sealing methods for the packaging material include the described ultrasonic and laser beam welding. Alternative sealing methods include heat welding and the use of biocompatible adhesives.

It is our intent to be limited only by the scope of the appending claims and not by way of the details and instrumentalities describing the embodiments shown herein.

It is to be understood that variations and modifications can be made on the aforementioned structure without departing from the concepts of the present invention, and further it is to be understood that such concepts are intended to be covered by the following claims unless these claims by their language expressly state otherwise.

## Claims

1. An electrochemical micro-battery comprising biocompatible cell components including:
a cylindrical anode (110) extending along a first vector;
a planar cathode (120) extending along a second vector, wherein said second vector is parallel to said first vector, said cathode being disposed from said anode by a predetermined space;
a flexible conducting cathode collector (130) in electrical contact with said cathode and extending along said second vector, wherein the cathode is a coating on the cathode collector;
an electrolyte (180) positioned surrounding said anode and said cathode and within said predetermined space to provide ionic conductivity between said anode and said cathode; and
flexible packaging (140, 150) surrounding said anode, said cathode, said cathode collector and said electrolyte, wherein said anode extends through said packaging along said first vector, and said cathode collector extends through said packaging along said second vector.

2. The electrochemical micro-battery according to claim 1, wherein both said first vector and said second vector are arcuate, and wherein said first vector and second vector are concentric to each other.

3. The electrochemical micro-battery according to claim 1, wherein said anode is a zinc wire.

4. The electrochemical micro-battery according to claim 1, wherein said cathode comprises manganese dioxide, a conductive material, and a binder.

5. The electrochemical micro-battery according to any one of claims 1 or 2, wherein the diameter of the anode equals the thickness of the cathode, so that the thickness of said electrochemical cell equals the anode diameter in addition to said packaging thickness.

6. The electrochemical micro-battery according to any one of claims 1, 2, 5, further comprising a second electrochemical cell connected in series to said electrochemical cell, wherein said anode of the electrochemical cell is electrically connected to a cathode collector (330) of said second electrochemical cell, and wherein said packaging of said electrochemical cell and a packaging (340, 350) of said second electrochemical cell are joined as to form a contiguous package.

7. The electrochemical micro-battery according to claim 6, wherein said anode of the electrochemical cell is welded to said cathode collector of said second electrochemical cell.

8. The electrochemical micro-battery according to claim 1, wherein said packaging prevents water and oxygen migration through said packaging.

9. The electrochemical micro-battery according to any one of claims 1-8, further comprising a second electrochemical cell connected in series to said electrochemical cell, wherein said anode of the electrochemical cell further includes an anode collector in electrical communication with said anode of the electrochemical cell, wherein said anode collector extends out of said electrochemical cell and extends into said second electrochemical cell, and wherein said anode collector is electrically connected to the cathode of said second electrochemical cell, and wherein said packaging of said electrochemical cell and said packaging of said second electrochemical cell are joined as to form a contiguous package.

10. The electrochemical micro-battery according to any one of claims 1-9, wherein the electrolyte comprises zinc acetate.

11. The electrochemical battery according to any one of claims 1-10, wherein the anode comprises zinc, and wherein the cathode comprises manganese dioxide.

12. The electrochemical battery according to claim 11, wherein said anode current collector and said cathode current collector comprise titanium.

## Patentansprüche

1. Elektrochemische Mikrobatterie mit biokompatiblen Zellenkomponenten, umfassend:
eine zylindrische Anode (110), die sich entlang eines ersten Vektors erstreckt;
eine flache Kathode (120), die sich entlang eines zweiten Vektors erstreckt, wobei der zweite Vektor parallel zu dem ersten Vektor ist, wobei die Kathode von der Anode um einen vorbestimmten Abstand beabstandet ist;
einen flexiblen leitenden Kathodenkollektor (130), der in elektrischem Kontakt mit der Kathode ist und sich entlang des zweiten Vektors erstreckt, wobei die Kathode eine Beschichtung auf dem Kathodenkollektor ist;
einen Elektrolyt (180), der die Anode und die Kathode umgebend und innerhalb des vorbestimmten Abstands positioniert ist, um eine Ionenleitfähigkeit zwischen der Anode und der Kathode bereitzustellen; und
ein flexibles Gebinde (140, 150), das die Anode, die Kathode, den Kathodenkollektor und den Elektrolyt umgibt, wobei sich die Anode durch das Gebinde entlang des ersten Vektors erstreckt, und sich der Kathodenkollektor durch das Gebinde entlang des zweiten Vektors erstreckt.

2. Elektrochemische Mikrobatterie nach Anspruch 1, wobei sowohl der erste Vektor als auch der zweite Vektor gebogen sind, und wobei der erste Vektor und der zweite Vektor konzentrisch zueinander sind.

3. Elektrochemische Mikrobatterie nach Anspruch 1, wobei die Anode ein Zinkdraht ist.

4. Elektrochemische Mikrobatterie nach Anspruch 1, wobei die Kathode Mangandioxid, ein leitendes Material und ein Bindemittel umfasst.

5. Elektrochemische Mikrobatterie nach einem der Ansprüche 1 oder 2, wobei der Durchmesser der Anode gleich der Dicke der Kathode ist, sodass die Dicke der elektrochemischen Zelle gleich dem Anodendurchmesser zusätzlich zu der Gebindedicke ist.

6. Elektrochemische Mikrobatterie nach einem der Ansprüche 1, 2, 5, ferner umfassend eine zweite elektrochemische Zelle, die in Reihe mit der elektrochemischen Zelle verbunden ist, wobei die Anode der elektrochemischen Zelle elektrisch mit dem Kathodenkollektor (330) der zweiten elektrochemischen Zelle verbunden ist, und wobei das Gebinde der elektrochemischen Zelle und ein Gebinde (340, 350) der zweiten elektrochemischen Zelle zusammengefügt sind, um ein zusammenhängendes Gebinde auszubilden.

7. Elektrochemische Mikrobatterie nach Anspruch 6, wobei die Anode der elektrochemischen Zelle an den Kathodenkollektor der zweiten elektrochemischen Zelle geschweißt ist.

8. Elektrochemische Mikrobatterie nach Anspruch 1, wobei das Gebinde eine Diffusion von Wasser und Sauerstoff durch das Gebinde verhindert.

9. Elektrochemische Mikrobatterie nach einem der Ansprüche 1-8, ferner umfassend eine zweite elektrochemische Zelle, die in Reihe mit der elektrochemischen Zelle verbunden ist, wobei die Anode der elektrochemischen Zelle ferner einen Anodenkollektor umfasst, der in elektrischer Verbindung mit der Anode der elektrochemischen Zelle ist, wobei sich der Anodenkollektor aus der elektrochemischen Zelle erstreckt und in die zweite elektrochemische Zelle erstreckt, und wobei der Anodenkollektor elektrisch mit der Kathode der zweiten elektrochemischen Zelle verbunden ist, und wobei das Gebinde der elektrochemischen Zelle und das Gebinde der zweiten elektrochemischen Zelle zusammengefügt sind, um ein zusammenhängendes Gebinde auszubilden.

10. Elektrochemische Mikrobatterie nach einem der Ansprüche 1-9, wobei der Elektrolyt Zinkacetat umfasst.

11. Elektrochemische Batterie nach einem der Ansprüche 1-10, wobei die Anode Zink umfasst, und wobei die Kathode Mangandioxid umfasst.

12. Elektrochemische Batterie nach Anspruch 11, wobei der Anodenstromkollektor und der Kathodenstromkollektor Titan umfassen.

## Revendications

1. Microbatterie électrochimique comprenant des composants de cellule biocompatibles comportant :
une anode cylindrique (110) s'étendant le long d'un premier vecteur ;
une cathode plane (120) s'étendant le long d'un deuxième vecteur, ledit deuxième vecteur étant parallèle audit premier vecteur, ladite cathode étant écartée de ladite anode par un espace prédéterminé ;
un collecteur cathodique conducteur souple (130) en contact électrique avec ladite cathode et s'étendant le long dudit deuxième vecteur, la cathode étant un revêtement sur le collecteur cathodique ;
un électrolyte (180) positionné pour entourer ladite anode et ladite cathode et à l'intérieur dudit espace prédéterminé pour assurer une conductivité ionique entre ladite anode et ladite cathode ; et
un emballage souple (140, 150) entourant ladite anode, ladite cathode, ledit collecteur cathodique et ledit électrolyte, ladite anode s'étendant à travers ledit emballage le long dudit premier vecteur, et ledit collecteur cathodique s'étendant à travers ledit emballage le long dudit deuxième vecteur.

2. Microbatterie électrochimique selon la revendication 1, dans laquelle ledit premier vecteur et ledit deuxième vecteur sont tous deux arqués, et dans lequel lesdits premier vecteur et deuxième vecteur sont concentriques l'un par rapport à l'autre.

3. Microbatterie électrochimique selon la revendication 1, dans laquelle ladite anode est un fil de zinc.

4. Microbatterie électrochimique selon la revendication 1, dans laquelle ladite cathode comprend du dioxyde de manganèse, un matériau conducteur, et un liant.

5. Microbatterie électrochimique selon l'une quelconque des revendications 1 et 2, dans laquelle le diamètre de l'anode est égal à l'épaisseur de la cathode, de telle sorte que l'épaisseur de ladite cellule électrochimique est égale au diamètre d'anode en plus de ladite épaisseur d'emballage.

6. Microbatterie électrochimique selon l'une quelconque des revendications 1, 2, 5, comprenant en outre une deuxième cellule électrochimique branchée en série à ladite cellule électrochimique, ladite anode de la cellule électrochimique étant branchée électriquement à un collecteur cathodique (330) de ladite deuxième cellule électrochimique, et ledit emballage de ladite cellule électrochimique et un emballage (340, 350) de ladite deuxième cellule électrochimique étant assemblés de manière à former un emballage contigu.

7. Microbatterie électrochimique selon la revendication 6, dans laquelle ladite anode de la cellule électrochimique est soudée audit collecteur cathodique de ladite deuxième cellule électrochimique.

8. Microbatterie électrochimique selon la revendication 1, dans laquelle ledit emballage empêche la migration d'eau et d'oxygène à travers ledit emballage.

9. Microbatterie électrochimique selon l'une quelconque des revendications 1 à 8, comprenant en outre une deuxième cellule électrochimique branchée en série à ladite cellule électrochimique, ladite anode de la cellule électrochimique comportant en outre un collecteur anodique en communication électrique avec ladite anode de la cellule électrochimique, ledit collecteur anodique s'étendant hors de ladite cellule électrochimique et s'étendant à l'intérieur de ladite deuxième cellule électrochimique, et ledit collecteur anodique étant branché électriquement à la cathode de ladite deuxième cellule électrochimique, et ledit emballage de ladite cellule électrochimique et ledit emballage de ladite deuxième électrochimique étant assemblés de manière à former un emballage contigu.

10. Microbatterie électrochimique selon l'une quelconque des revendications 1 à 9, dans laquelle l'électrolyte comprend de l'acétate de zinc.

11. Batterie électrochimique selon l'une quelconque des revendications 1 à 10, dans laquelle l'anode comprend du zinc, et dans laquelle la cathode comprend du dioxyde de manganèse.

12. Batterie électrochimique selon la revendication 11, dans laquelle ledit collecteur de courant anodique et ledit collecteur de courant cathodique comprennent du titane.
